# EUROPÄISCHE PATENTSCHRIFT

(11) **EP 1 457 148 B1**
(45) Veröffentlichungstag und Bekanntmachung des Hinweises auf die Patenterteilung: **23.09.2009**
(21) Anmeldenummer: 04003462.1
(22) Anmeldetag: 17.02.2004
(51) Int. Cl.: A47J 43/26

(54) **Vorrichtung zum Knacken einer Nuss**
Device for cracking a nut
Dispositif pour casser une noix

(30) Priorität: 10.03.2003 DE 20303765 U
(43) Veröffentlichungstag der Anmeldung: 15.09.2004
(73) Patentinhaber: Lenzkes, Karl-Heinz, 58579 Schalksmühle (DE)
(72) Erfinder: Lenzkes, Karl-Heinz, 58579 Schalksmühle (DE)
(74) Vertreter: Rehberg Hüppe + Partner

(56) Entgegenhaltungen:
- DE-U- 20 019 811
- DE-U- 29 715 412
- DE-U- 29 904 514
- FR-A- 2 446 101
- FR-A- 2 701 378
- FR-A- 2 763 825
- US-A- 1 412 249
- US-A- 6 135 021

## Beschreibung

Die Erfindung betrifft eine Vorrichtung zum Knacken einer Nuss, mit zwei relativ zueinander beweglichen Stempeln. Nüsse gleich welcher Art, beispielsweise Walnüsse, Paranüsse, Haselnüsse und dergleichen, besitzen bekanntlich eine harte Schale und einen zum Verzehr geeigneten Kern. Um an den Kern zu gelangen, muss die betreffende Nuss geknackt werden, wobei es darauf ankommt, die Schale einzudrücken und so in Stücken abnehmbar zu gestalten, ohne den Kern zu beschädigen, insbesondere zu verdrücken.

### STAND DER TECHNIK

Es sind Vorrichtungen zum Knacken von Nüssen bekannt, die nach Art von Handzangen ausgebildet sind und bei denen zwei schwenkbar aneinander angelenkte Handgriffe vorgesehen sind, in deren Bereich zwei relativ zueinander bewegliche Stempel ausgebildet sind, zwischen denen die betreffende Nuss eingelegt und geknackt wird. Da unterschiedliche Nüsse, insbesondere von unterschiedlichen Nussarten, auch unterschiedliche Größen besitzen, ist es nicht einfach, diese Nüsse ohne Beschädigung des Kerns zu knacken. Die bekannten zangenartigen Nussknacker weisen nur eine Endlage auf, in der die Handgriffe voneinander den geringsten Abstand aufweisen, der durch Anschläge definiert ist. Damit wird auch der maximale Weg der Stempel aufeinander zu begrenzt. Dieser maximale Weg kann nur für eine Nussart optimal sein. Die Benutzung solcher Handzangen führt daher meist regelmäßig zum Zerdrücken oder zumindest zum Andrücken des Kerns. Wenn die Stempel keilförmig ausgebildet sind, besteht die Möglichkeit, im Rahmen der Geschicklichkeit des Benutzers die Nuss gezielt an unterschiedlichen Stellen in die Handzange einzulegen und so eine Anpassung des jeweiligen maximalen Weges an den Durchmesser der Nuss vorzunehmen.

Es sind andere Nussknacker bekannt, die auf dem Prinzip einer Schraube bzw. einer Schraubspindel basieren. Auch dabei sind zwei relativ zueinander bewegliche Stempel vorgesehen. Der eine Stempel ist jedoch mit einer Schraubspindel verbunden, so dass er sich dem anderen Stempel infolge einer aufgebrachten Drehbewegung nähert. Diese Nussknacker haben den Vorteil, dass die Beendigung der Drehbewegung unmittelbar den Hub des betreffenden drehbeweglichen Stempels beendet, so dass damit bereits feinfühliger Nüsse unterschiedlicher Größe geknackt werden können, ohne den Kern zu beschädigen. Oft erfordert die Drehbewegung jedoch einen erheblichen Kraftaufwand, insbesondere bei relativ harten Nüssen. Derartige Nussknacker sind oft aus Holz gefertigt, sodass die Gefahr besteht, dass der Gewindegang der Schraubspindel bei Auftreten hoher Kräfte ausbricht.

Aus der US-A-1,412,249 ist eine gattungsgemäße Vorrichtung zum Knacken einer Nuss bekannt, die zwei relativ zueinander bewegliche Stempel aufweist. Der eine Stempel ist als Gesenk und der andere Stempel als ein bewegliches, der Schwerkraft über eine Fallhöhe oder dem Einfluss eines Hammers aussetzbares vertikal geführtes Fallgewicht ausgebildet. Die Masse und die Fallhöhe des das Fallgewicht bildenden Stempels sind zum Knacken der Nuss bemessen. Die Fallhöhe kann zwar durch unterschiedlich hohes Anheben des das Fallgewicht bildenden Stempels verändert werden. Ohne eingesetzte Nuss endet die Fallhöhe des Fallgewichts jedoch immer mit dem Auftreffen des Fallgewichts auf das Gesenk. Dieser direkte Kontakt der beiden Stempel wird auch nicht durch kleine Vertiefungen in der Oberfläche der beiden Stempel verhindert. Mit eingesetzter Nuss endet die Fallhöhe des Fallgewichts immer in unterschiedlicher Höhe, abhängig von der Größe und den sonstigen Eigenschaften der Nuss. Das Gesenk ist mit einer rohrförmig ausgebildeten Fallstange verbunden, in dem der andere, als Fallgewicht ausgebildete Stempel geführt wird.

Aus der FR-A-2 763 825 ist eine Vorrichtung zum Knacken einer Nuss bekannt, die ebenfalls zwei relativ zueinander bewegliche Stempel aufweist. Um den Benutzer zu schützen ist ein Fallrohr zur Führung des Fallgewichts von einer anhebbaren Schutzhülse umgeben, die etwa auf mittlerer Höhe des Fallrohres festgesetzt werden kann, um die Fallhöhe des Fallgewichts bei einem versehentlichen Auslösen zu begrenzen. Ohne eingesetzte Nuss endet die Fallhöhe des Fallgewichts bei abgesenkter Schutzhülse jedoch immer mit dem Auftreffen des Fallgewichts auf das Gesenk. Dieser direkte Kontakt der beiden Stempel wird auch nicht durch kleine Vertiefungen in der Oberfläche des Gesenks verhindert. Eine Graduierung am Fallrohr ermöglicht es dem Benutzer, den Ausgangspunkt der Fallhöhe zu variieren.

Aus der FR-A-2 446 101 ist eine Vorrichtung zum Knacken einer Nuss bekannt, bei der der das Gesenk bildende Stempel mit einem der Länge nach ausgenommenen Fallrohr versehen ist, in dem der das Fallgewicht bildende Stempel in Längsnuten des Fallrohres geführt ist. Der das Gesenk bildende Stempel weist dem Fallgewicht zugekehrt angeordnete elastische Puffer auf, die die Fallhöhe begrenzen und der Geräuschminderung dienen. Die US-A-6,135,021 zeigt eine Vorrichtung zum Knacken einer Nuss, bei in einem beweglichen Stempel, der in einem Rohr geführt ist, eine Fallstange verankert ist, auf der wiederum ein bewegliches Fallgewicht geführt ist. Das bewegliche, der Schwerkraft aussetzbare Fallgewicht weist eine Durchbrechung auf. Die Vorrichtung weist eine verhältnismäßig große Anzahl von Einzelteilen auf und baut damit aufwändig und kostenintensiv.

### AUFGABE DER ERFINDUNG

Der Erfindung liegt die Aufgabe zugrunde, eine Vorrichtung zum Knacken einer Nuss bereitzustellen, mit der Nüsse auch unterschiedlicher Größe und/oder Nussart feinfühlig und mühelos geknackt werden können, wobei die Gefahr des Beschädigens des Kerns erheblich reduziert ist.

### LÖSUNG

Erfindungsgemäß wird dies durch eine Vorrichtung zum Knacken einer Nuss mit den im Anspruch 1 angegebenen Merkmalen erreicht.

### BESCHREIBUNG DER ERFINDUNG

Das bewegliche, der Schwerkraft aussetzbare Fallgewicht weist eine Durchbrechung auf und es ist eine sich durch die Durchbrechung hindurch erstreckende Fallstange vorgesehen, die die vertikale Führung des Fallgewichts bewirkt. Die Durchbrechung ist beidseitig randoffen ausgebildet und zentral an dem Fallgewicht angeordnet, so dass das Fallgewicht in der auf die Nuss auftreffenden Relativlage teilweise oder ganz aus der Fallstange austritt bzw. insoweit von der Fallstange freikommt. Das Fallgewicht erhält eine eindeutige Relativlage zum Auftreffzeitpunkt auf die Nuss. Die Fallstange ist U-förmig abgewinkelt ausgebildet, die mit ihrem einen Schenkel in dem das Gesenk bildenden Stempel verankert ist, während der andere, sich durch den das Fallgewicht bildenden Stempel hindurch erstreckenden Schenkel frei oberhalb der Vertiefung des das Gesenk bildenden Stempels endet.

Vorzugsweise weisen die beiden Stempel auf den einander zugekehrten Oberflächen Vertiefungen auf. Diese Vertiefungen können mit unterschiedlichen Radien versehen sein. Sinnvoll ist es, wenn das Fallgewicht den kleineren Radius besitzt. Die Gestaltung von konvexen Vertiefungen wirkt sich so aus, dass Bestandteile der geknackten Nussschale sich in den Vertiefungen sammeln bzw. in vergleichsweise geringem Maße abgeschleudert werden.

Die Ausführungsformen erbringen besonders formschöne und dekorative Ausbildungen, bei denen zugleich durch die gegenseitige Bemessung sichergestellt sein kann, dass der das Fallgewicht bildende Stempel nicht gänzlich von der Fallstange freikommen kann. Damit wird eine verliersichere Führung realisiert. Andererseits bleibt infolge des frei endenden Schenkels oder bei Anordnung von zwei Fallstangen hinreichend Platz, um auch unterschiedlich große Nüsse in dem ortsfesten Stempel zum Zwecke des Knackens aufzulagern.

Der das Fallgewicht bildende Stempel kann etwa kugelförmige Gestalt aufweisen. Auf der Unterseite kann eine Vertiefung vorgesehen sein. Aber auch eine konvexe Gestaltung ist möglich. Die Durchbrechung erstreckt sich vertikal durch das kugelförmige Fallgewicht hindurch. Wenn mehrere Durchbrechungen oder Nuten vorgesehen sind, sind diese vorzugsweise exzentrisch zur Achse an dem Fallgewicht angeordnet.

Zur Vereinfachung der Benutzung kann die Fallstange mit den einzelnen Nussarten zugeordneten und unterschiedlichen Fallhöhen entsprechenden Kennzeichnungen versehen sein. Eine Haselnuss erfordert zum Knacken in aller Regel eine geringere Fallhöhe als beispielsweise eine Paranuss oder eine Walnuss. Natürlich gibt es auch innerhalb einer Nussart noch unterschiedlich große bzw. unterschiedlich harte Nüsse. Wenn bei einem ersten Fall- bzw. Knackversuch das gewünschte Ergebnis noch nicht eintritt, kann durch Vergrößerung der Fallhöhe feinfühlig eine erhöhte Kraft zum Einsatz gebracht und damit das gewünschte Ergebnis erreicht werden.

In aller Regel ist das bewegliche, der Schwerkraft aussetzbare Fallgewicht als rotationssymmetrischer Körper ausgebildet. Wichtig ist aber nur, dass die entsprechende Masse konzentriert an dem Stempel untergebracht werden kann. Das Fallgewicht besteht bevorzugt aus einem metallenen massiven Körper, der vertikal von der Durchbrechung oder den Durchbrechungen durchsetzt ist.

Im Bereich der Stempel kann ein Spritzschutz vorgesehen sein. Der Spritzschutz dient dazu, beim Knacken der Nuss das Wegfliegen von Teilen der Nussschale zu verhindern. Der Spritzschutz kann an dem das Fallgewicht bildenden Stempel oder an dem das Gesenk bildenden Stempel angeordnet bzw. mit diesem verbunden sein. Eine dritte Möglichkeit besteht darin, den Spritzschutz lose zwischen den Stempeln anzuordnen. Der Spritzschutz sollte insbesondere zumindest teilweise federnd nachgiebig ausgebildet sein oder aus einem entsprechenden Material bestehen, um unterschiedliche Fallhöhen bzw. unterschiedliche Annäherungen der Stempel zuzulassen. Der Spritzschutz kann z. B. aus einer zylindrischen oder kegelförmigen Feder, aus einem Formkörper aus nachgiebigem Kunststoffschaum o. dgl. bestehen. Der Spritzschutz kann auch aus einem oder mehreren einander teleskopartig überdeckenden Rändern an den Stempeln bestehen

Der das Gesenk bildende Stempel kann vorzugsweise als Standfuß ausgebildet sein und kommt dann mit der U-förmig ausgebildeten, jedoch umgekehrt angeordneten Fallstange in Wirkverbindung.

Der das Gesenk bildende Stempel kann zweckmäßig eine größere Masse als der das Fallgewicht bildende Stempel aufweisen. Auf diese Weise entsteht ein standfester und leicht handhabbarer Nussknacker, der nicht nur die technischen Bedingungen erfüllt, sondern auch noch ein formschönes dekoratives Aussehen besitzt.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform der Vorrichtung zum Knacken einer Nuss.
- **Fig. 2**: zeigt eine zweite Ausführungsform der Vorrichtung.
- **Fig. 3**: zeigt eine dritte Ausführungsform der Vorrichtung.
- **Fig. 4**: zeigt eine vierte Ausführungsform der Vorrichtung.
- **Fig. 5**: zeigt eine fünfte Ausführungsform der Vorrichtung.

### FIGURENBESCHREIBUNG

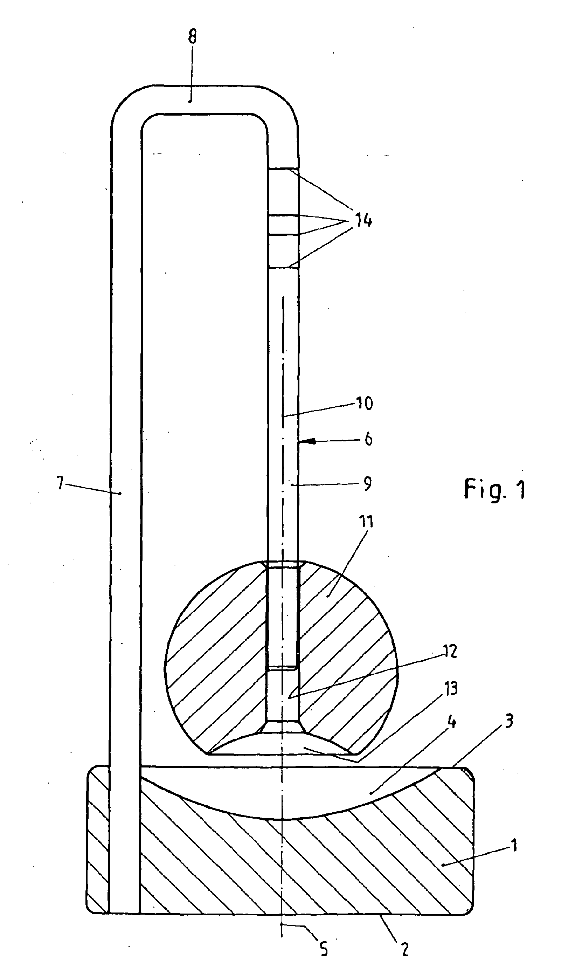

Die in **Fig. 1** dargestellte Vorrichtung zum Knacken von Nüssen weist einen ersten Stempel 1 auf, der zugleich als Standfuß für die gesamte Vorrichtung dient. Der Stempel 1 ist auf seiner Unterseite 2 eben ausgebildet, so dass damit die Vorrichtung auf einem Tisch oder einer anderen Unterlagen aufstellbar ist. Der Stempel 1 bildet zugleich ein Gesenk und besitzt zu diesem Zweck auf seiner Oberseite 3 eine konkave Vertiefung 4. Der Stempel 1 kann als rotationssymmetrischer Körper um eine Achse 5 ausgebildet sein. Er besteht aus einem Körper relativ großer Masse, beispielsweise Metall, und verleiht der gesamten Vorrichtung ihre Stabilität und Standfestigkeit.

Die Vorrichtung weist weiterhin eine Fallstange 6 auf, die als U-förmiger Drahtbügel ausgebildet ist. Die Fallstange 6 besitzt einen ersten Schenkel 7, der in dem das Gesenk bildenden Stempel 1 verankert ist. Nach der oben befindlichen doppelten Abkröpfung 8 schließt sich nach unten reichend ein zweiter Schenkel 9 der Fallstange 6 an. Der Schenkel 9 besitzt eine Achse 10, die zu der Achse 5 des Stempels 1 und damit auch zu der Vertiefung 4 fluchtend angeordnet ist.

Die Fallstange 6 bzw. deren Schenkel 9 bildet eine Führung für einen Stempel 11, der als Fallgewicht ausgebildet ist. Der Stempel 11 ist gegenüber dem Stempel 1 relativbeweglich. Zu seiner Führung weist der Stempel 11 eine Durchbrechung 12 auf, durch die der Schenkel 9 der Fallstange 6 ganz oder teilweise hindurchragt. Auf diese Weise lässt sich der Stempel 11 manuell anheben und durch Freigabe fallen lassen. Auch der Stempel 11 besteht aus einem Körper relativ großer Masse, beispielsweise einer Metallkugel. Der Stempel 11 besitzt auf seiner Unterseite eine konkave Vertiefung 13, so dass bei einem Fallvorgang eine in der Vertiefung 4 des Stempels 1 mittig eingelegten Nuss (nicht dargestellt) von einem herabfallenden Stempel 11 getroffen und die Nussschale damit geknackt wird. Infolge der gegenseitigen Zuordnung der Vertiefungen 4 und 13 an den Stempeln 1 und 11 gelangt die Nuss automatisch einerseits zentrisch zur Achse 5 in die Vertiefung 4. Sie wird auch beim Herabfallen des Stempels 11, der ein Fallgewicht bildet, mittig getroffen und geknackt. Zugleich verhindern die Vertiefungen 4 und 13, dass Splitter der Nussschale nach dem Herabfallen des Stempels 11 gleichsam gefangen werden und Schalenstücke nur ausnahmsweise aus der Vertiefung 4 herausspritzen.

Der Benutzer der Vorrichtung zum Knacken der Nuss kann durch Wahl unterschiedlicher Fallhöhen bei mehrfachen hintereinander durchzuführenden Fallversuchen eine feinfühlige Anpassung an die jeweilige Nuss erzielen, so dass das gewünschte Ergebnis, nämlich die Nussschale ohne Verletzung des Kerns der Nuss zu knacken, in hohem Maße verlässlich eintritt. Zur Erleichterung der Benutzung unterschiedlicher Fallhöhen kann der Schenkel 9 der Fallstange 6 verschiedene Kennzeichnungen 14 tragen, die auf verschiedene Nussarten oder aber auch einfach als Skala für unterschiedliche Fallhöhen ausgebildet sein können.

In dem in **Fig. 1** dargestellten Beispiel, welches den Stempel 11 während eines Fallversuchs zu einem bestimmten Zeitpunkt relativ zum Stempel 1 zeigt, ist erkennbar, dass der Stempel 11 mit seiner beidseitig offenen Durchbrechung 12 an dem Schenkel 9 der Fallstange 6 verliersicher angeordnet ist. Die Ausbildung kann aber auch so getroffen werden, dass der Schenkel 9 der Fallstange 6 etwas höher endet, so dass der Stempel 11 beispielsweise zu Reinigungszwecken abgenommen werden kann. Sinnvoll ist es, die Ausbildung so zu wählen, dass der Stempel 11 als Fallgewicht auch zum Zeitpunkt des Auftreffens auf eine Nuss noch teilweise an dem Schenkel 9 der Fallstange 6 geführt ist. Weiterhin ist erkennbar, dass die Stempel 1 und 11 nicht unbedingt rotationssymmetrisch ausgebildet sein müssen. Auch eine im Querschnitt quadratische Ausbildung ist beispielsweise möglich.

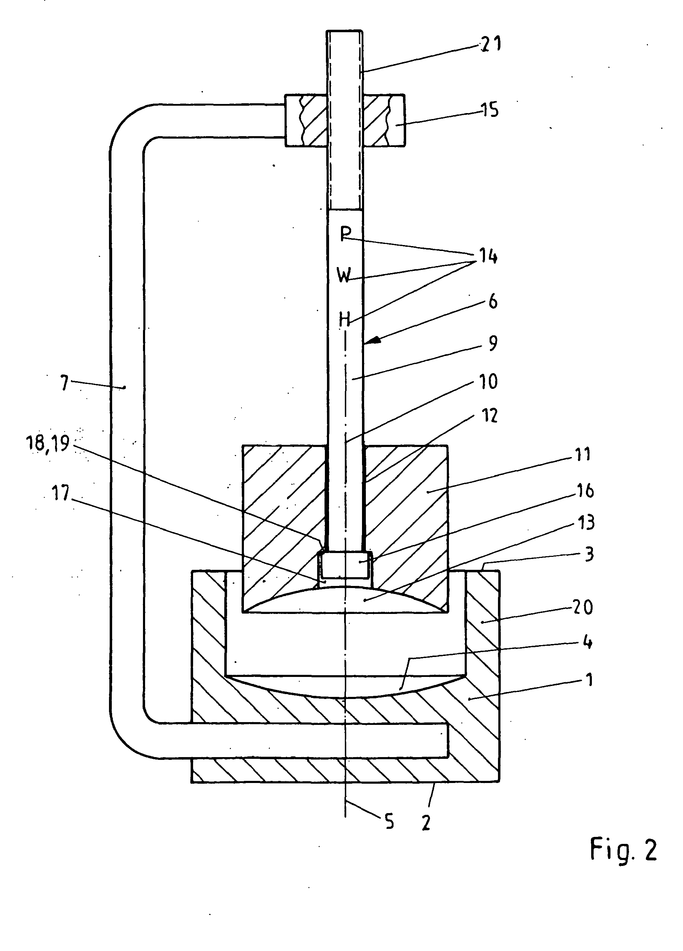

**Fig. 2** zeigt eine weitere Ausführungsform der Vorrichtung zum Knacken einer Nuss. Auch hier findet die Ausnutzung der Schwerkraft über den relativbeweglichen Stempel 11 Verwendung. Die Führung des beweglichen Stempels 11 ist hier mehrteilig ausgebildet. Der Schenkel 7 ist auch hier in dem das Gesenk bildenden Stempel 1 verankert. Er weist an seinem oberen Ende eine Mutter 15 mit Innengewinde auf. Der Schenkel 9 der Fallstange 6 ist hier als separates stangenförmiges Teil ausgebildet. Er besitzt in seinem oberen Bereich einen Abschnitt aus einem Außengewinde 21, mit der er in dem Innengewinde der Mutter 15 verdrehbar gelagert ist. Am unteren Ende des Schenkels 9 ist ein verdickter Kopf 16 vorgesehen. In Zuordnung dazu ist die Durchbrechung 12 des Stempels 11 gestuft ausgebildet und weist eine dem Kopf 16 zugeordnete Erweiterung 17 auf. Der Kopf 16 bildet mit seinem oberen überstehenden Rand einen Anschlag 18, dem ein ringförmiger entsprechender Gegenanschlag 19 an dem beweglichen Stempel 11 zugeordnet ist. Damit wird der Fallweg des Stempels 11 begrenzt. Durch Verdrehen des Schenkels 9 der Fallstange 6 kann die Endlage des Stempels 11 nach einem Fallversuch festgelegt werden. Damit besteht die Möglichkeit, diese Endlage individuell feinfühlig auf den Durchmesser der jeweiligen Nuss einzustellen und so auf jeden Fall zu verhindern, dass der Kern der Nuss unbeabsichtigt beim Knacken zerquetscht wird. Auch hier können wiederum die Kennzeichen 14, die hier verschiedene Nussarten, z. B. von Haselnüssen H, Walnüssen W und Paranüssen P zugeordnet sind, vorgesehen sein, um auch so dem Benutzer einen Hinweis auf die unterschiedlichen zu wählenden Fallhöhen zu geben.

Wie aus **Fig. 2** erkennbar ist, weist der den Standfuß bzw. das Gesenk bildende Stempel 1 einen umlaufenden hochgezogenen Rand 20 auf, in den der bewegliche Stempel 11 beim Herabfallen auf eine Nuss zumindest teilweise eintritt. Damit wird noch wirkungsvoller als bei dem Ausführungsbeispiel der **Fig. 1** verhindert, dass Splitter der Nussschale bei einem Knacken die Vorrichtung verlassen können.

Die Einzelteile der Vorrichtung bestehen insbesondere aus Metall. Es wird zugleich ein dekoratives Aussehen der Vorrichtung erreicht, welches den technischen Zweck der Vorrichtung entsprechend ergänzt.

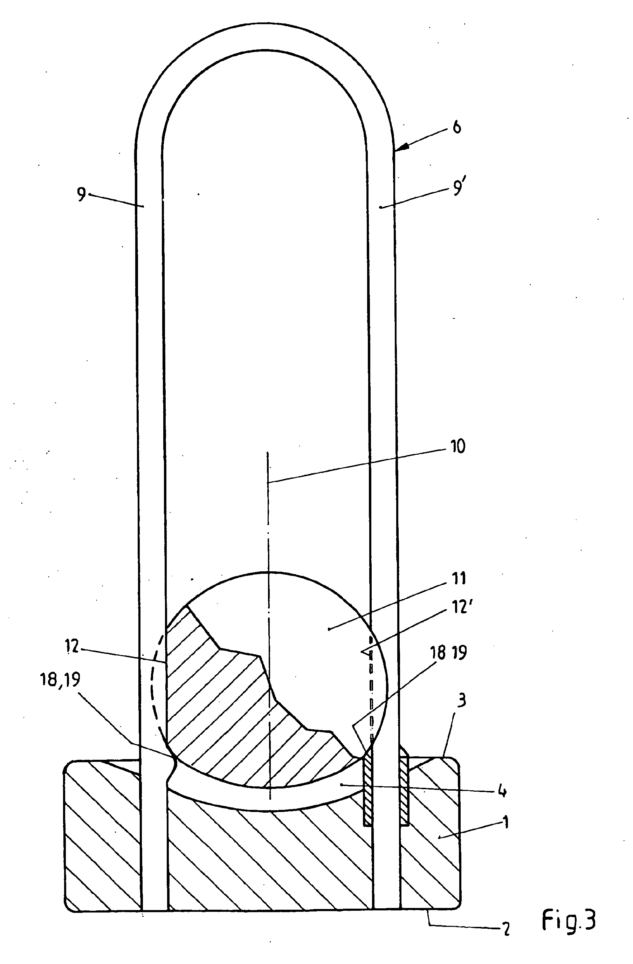

Bei der in **Fig. 3** dargestellten Ausführungsform wird der das Fallgewicht bildende bewegliche Stempel 11 an einer U-förmigen Fallstange 6 geführt. Die Fallstange 6 besitzt zwei Schenkel 9 und 9', die exzentrisch zur Achse 10 vorgesehen sind und deren untere Enden in dem ortsfesten Stempel 1 verankert sind. Der bewegliche Stempel 11 besitzt in Zuordnung zu den Schenkeln 9 und 9' Durchbrechungen 12 und 12', die hier als randoffene Nuten ausgebildet sind. Das Fallgewicht ist damit verliersicher zwischen den Schenkeln 9 und 9' aufgenommen und über die gesamte Fallhöhe in gleicher Weise sicher geführt. Der bewegliche Stempel 11 ist hier auf seiner dem ortsfesten Stempel 1 zugekehrten Seite durchgehend konvex gestaltet. Statt dessen könnte aber auch die in den **Fig. 1** **und** **2** dargestellte Vertiefung 13 durchgehend verwirklicht werden. Der Vorteil besteht darin, dass der bewegliche Stempel 11 auf seiner Unterseite ohne Loch gestaltet ist, also seine Fläche in der Nähe der Achse 10 durchgehend vorgesehen ist. Die Gestaltung der Auftrefffläche des beweglichen Stempels 11 auf die Nuss ist damit in keiner Weise begrenzt.

Auch bei dieser in **Fig. 3** gezeigten Ausführungsform kann die Fallhöhe durch einen Anschlag 18 und einen zugeordneten Gegenanschlag 19 begrenzt werden. Während in **Fig. 2** eine einstellbare Fallhöhenbegrenzung dargestellt ist, zeigt **Fig. 3** zwei Möglichkeiten für feste Fallhöhenbegrenzung. Auf der linken Seite ist der Anschlag 18 in Form einer Verdickung am Schenkel 9 verwirklicht. Auf der rechten Seite ist eine andere Ausführungsform dargestellt, bei der der Anschlag 18 von einer in den ortsfesten Stempel 1 eingesetzten Hülse gebildet wird. Der jeweilige Gegenanschlag 19 wird von einem Oberflächenbereich des beweglichen Stempels 11 gebildet.

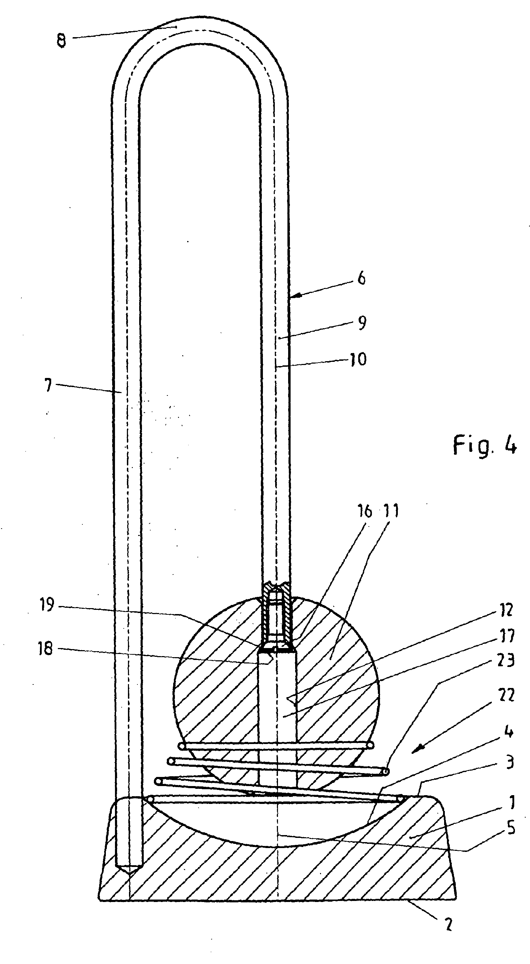

In **Fig. 4** ist ein weiteres Ausführungsbeispiel der Vorrichtung dargestellt, welches auf den vorangehend beschriebenen Ausführungsbeispielen der Fig. 1 bis 3 aufbaut. Insoweit kann auf die dortige Beschreibung verwiesen werden. Der verdickte Kopf 16 wird hier von einer Schraube gebildet, die in das untere Ende des Schenkels 9 der Fallstange 6 eingeschraubt ist. Die Schraube bildet hier einen kegelförmigen Anschlag 18, der mit einem entsprechend geformten Gegenanschlag 19 zusammenarbeitet, so dass auf diese Art und Weise die Fallhöhe begrenzt ist. Der das Fallgewicht bildende Stempel 11 ist hier als rotationssymmetrischer Körper ausgebildet. Er besitzt auf seiner dem Stempel 1 zugekehrten Unterseite keine Vertiefung, abgesehen von der Gestaltung, die durch die Durchbrechung 12 mit ihrer gefasten Erweiterung 17 gebildet wird.

Die Vorrichtung gemäß Fig. 4 weist einen Spritzschutz 22 auf, der hier von einer kegeligen Feder 23 gebildet wird. Die Feder 23 kann als loses Teil vorgesehen sein. Zur besseren zentrierten Anlage kann die Vertiefung 4 mit einer umlaufenden Nut (nicht dargestellt) versehen sein. Die Feder 23 kann in ihrer entspannten Lage eine etwas größere Höhe als dargestellt aufweisen, so dass sie beim Fallenlassen des Stempels 11 geringfügig zusammengepresst wird. Damit gelangen die Windungen der Feder 23 näher aneinander und der Spritzschutz 22 wird begünstigt. Durch den Spritzschutz 22 wird verhindert, dass Teile der Schale der Nuss beim Knacken aus der Vertiefung 4 des Stempels 1 nach außen heraus gelangen. Die Feder 23 kann mit dem Stempel 1 oder dem Stempel 11 dauerhaft verbunden sein. Die Verbindung zum Stempel 11 wird bevorzugt, weil dann die Nuss bzw. die Schalenteile in der Vertiefung 4 nach dem Hochheben des Stempels 11 leichter zugänglich sind. Grundsätzlich ist aber jede der drei aufgezeigten Anbringungsarten möglich.

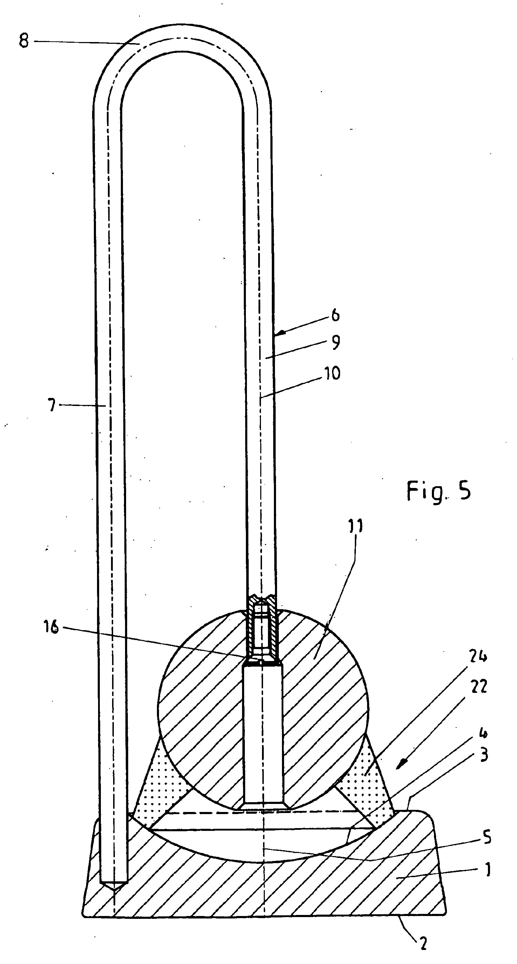

Ein weiteres Ausführungsbeispiel der Vorrichtung ist in **Fig. 5** dargestellt. Auch dieses Ausführungsbeispiel schließt an die vorangehend beschriebenen Ausführungsbeispiele an, so dass bezüglich der Beschreibung hierauf verwiesen werden kann. Als Spritzschutz 22 ist hier ein Formkörper 24 aus einem nachgiebigen Kunststoffschaum vorgesehen. Auch dieser Formkörper 24 ist zweckmäßig mit dem Stempel 11 dauerhaft verbunden. Aber auch die beiden anderen Anbringungsarten sind möglich. Der als Spritzschutz 22 dienende Formkörper 24 hat den Vorteil, dass er eine um die Nuss geschlossene Wandung darstellt, ähnlich wie der hochgezogene Rand 20 der Ausführungsform der Fig. 2, der ebenfalls einen Spritzschutz 22 bildet. Ein Spritzschutz 22 kann auch an beiden Stempeln 1 und 11 ausgebildet bzw. vorgesehen sein, indem der eine Teil an dem Stempel 1 und der andere Teil an dem Stempel 11 vorgesehen ist und die beiden Stempel 1 und 11 mit ihren Rändern teleskopartig ineinander greifen, wenn sich der Stempel 11 in der Auftreffstellung auf die Nuss befindet.

### BEZUGSZEICHENLISTE

- 1: Stempel
- 2: Unterseite
- 3: Oberseite
- 4: Vertiefung
- 5: Achse
- 6: Fallstange
- 7: Schenkel
- 8: Abkröpfung
- 9: Schenkel
- 10: Achse

- 11: Stempel
- 12: Durchbrechung
- 13: Vertiefung
- 14: Kennzeichnung
- 15: Mutter
- 16: Kopf
- 17: Erweiterung
- 18: Anschlag
- 19: Gegenanschlag
- 20: Rand

- 21: Außengewinde
- 22: Spritzschutz
- 23: Feder
- 24: Formkörper

## Patentansprüche

1. Vorrichtung zum Knacken einer Nuss, mit zwei relativ zueinander beweglichen Stempeln (1, 11), von denen der eine Stempel (1) als Gesenk und der andere Stempel (11) als ein bewegliches, der Schwerkraft aussetzbares Fallgewicht ausgebildet ist, wobei das bewegliche, der Schwerkraft aussetzbare Fallgewicht vertikal geführt ist und die Masse und die Fallhöhe des das Fallgewicht bildenden Stempels (11) zum Knacken der Nuss bemessen sind, **dadurch gekennzeichnet, dass** das bewegliche, der Schwerkraft aussetzbare Fallgewicht eine Durchbrechung (12; 12, 12') aufweist und eine sich durch die Durchbrechung hindurcherstreckende Fallstange (6) vorgesehen ist, die U-förmig abgewinkelt ausgebildet ist, die mit ihrem einen Schenkel (7) in dem das Gesenk bildenden Stempel (1) verankert ist, während der andere, sich durch den das Fallgewicht bildenden Stempel (11) hindurcherstreckende Schenkel (9) frei oberhalb der Vertiefung (4) des das Gesenk bildenden Stempels (1) endet.

2. Vorrichtung nach Anspruch 1, **dadurch gekennzeichnet, dass** die beiden Stempel (1, 11) auf den einander zugekehrten Oberflächen mit Vertiefungen (4, 13) versehen sind.

3. Vorrichtung nach mindestens einem der Ansprüche 1 bis 2, **dadurch gekennzeichnet, dass** der das Fallgewicht bildende Stempel (11) etwa kugelförmige Gestalt und auf seiner Unterseite die Vertiefung (13) aufweist.

4. Vorrichtung nach mindestens einem der Ansprüche 1 bis 3, **dadurch gekennzeichnet, dass** die Fallstange mit den einzelnen Nussarten zugeordneten und unterschiedlichen Fallhöhen entsprechenden Kennzeichnungen (14) versehen ist.

5. Vorrichtung nach mindestens einem der Ansprüche 1 bis 4, **dadurch gekennzeichnet, dass** im Bereich der Stempel (1, 11) ein Spritzschutz (22) vorgesehen ist.

6. Vorrichtung nach Anspruch 5, **dadurch gekennzeichnet, dass** der Spritzschutz (22) mit dem das Fallgewicht bildenden Stempel (11) verbunden ist.

7. Vorrichtung nach mindestens einem der Ansprüche 1 bis 6, **dadurch gekennzeichnet, dass** der das Gesenk bildende Stempel (1) als Standfuß ausgebildet ist und eine größere Masse als der das Fallgewicht bildende Stempel (11) aufweist.

## Claims

1. An apparatus for cracking a nut, comprising two dies (1, 11) being movable with respect to each other, one of the dies (1) being designed as a swage anvil and the other die (11) being designed as a movable falling weight being subjectable to gravity, the movable falling weight being subjectable to gravity being guided in a vertical direction and the mass and the falling height of the movable die (11) being dimensioned to crack the nut, **characterised in that** the movable falling weight being subjected to gravity includes an opening (12; 12, 12') and a fall bar (6) protruding through the opening, the fall bar having a U-like angled shape, the fall bar including a first leg (7) being fixedly connected to the die (1) forming the swage anvil, while the other leg (9) protruding through the die (11) forming the falling weight freely ends above the impression (4) of the die (1) forming the swage anvil.

2. The apparatus of claim 1, **characterised in that** both dies (1, 11) at surfaces facing one another include impressions (4, 13).

3. The apparatus of at least one of the claims 1 to 2, **characterised in that** the die (11) forming the falling weight has an approximately spherical shape and a bottom side includes the impression (13).

4. The apparatus of at least one of the claims 1 to 3, **characterised in** the fall bar includes a plurality of marks (14) being associated with different kinds of nuts and different kinds of falling heights.

5. The apparatus of at least one of the claims 1 to 4, **characterised in that** a splash guard element (22) is arranged in the region of the dies (1, 11).

6. The apparatus of claim 5, **characterised in that** the splash guard element (22) is connected to the die (11) forming the falling weight.

7. The apparatus of at least one of the claims 1 to 6, **characterised in that** the die (1) forming the swage anvil is designed as a stand having a mass which is greater mass than the mass of the die (11) forming the falling weight.

## Revendications

1. Dispositif pour casser une noix, avec deux poinçons (1, 11) mobiles l'un par rapport à l'autre dont l'un (1) sert de matrice et l'autre poinçon (11) est conformé comme une masse tombante mobile utilisant la gravité, la masse tombante mobile utilisant la gravité étant guidée verticalement et la masse et la hauteur de chute du poinçon formant la masse tombante étant dimensionnées pour casser la noix, **caractérisé en ce que** la masse tombante mobile utilisant la gravité présente une perforation (12 ; 12, 12') et qu'il est prévu une barre de chute (6) s'étendant à travers la perforation, qui est repliée en forme de U, qui est fixée par l'une de ses branches (7) dans le poinçon (1) formant la matrice tandis que l'autre branche (9) s'étendant à travers le poinçon formant la masse tombante (11) se termine libre au-dessus de la concavité (4) du poinçon formant la matrice.

2. Dispositif selon la revendication 1, **caractérisé en ce que** les deux poinçons (1, 11) sont pourvus de concavités (4, 13) sur leurs surfaces en vis-à-vis.

3. Dispositif selon au moins l'une des revendications 1 et 2 **caractérisé en ce que** le poinçon (11) formant la masse tombante présente une forme à peu près sphérique et la concavité (13) sur sa face inférieure.

4. Dispositif selon au moins l'une des revendications 1 à 2 **caractérisé en ce que** la barre de chute est pourvue de marquages (14) correspondant à chaque type de noix et à différentes hauteurs de chute.

5. Dispositif selon au moins l'une des revendications 1 à 4 **caractérisé en ce qu'**une protection contre les éclats (22) est prévue dans la zone du poinçon (1, 11).

6. Dispositif selon la revendication 5, **caractérisé en ce que** la protection contre les éclats (22) est reliée au poinçon (11) formant la masse tombante.

7. Dispositif selon au moins l'une des revendications 1 à 6 **caractérisé en ce que** le poinçon (1) formant la matrice constitue un pied et présente une masse supérieure à celle du poinçon (11) constituant la masse tombante.
